(19) Europäisches Patentamt
European Patent Office
Office européen des brevets

(11) **EP 4 629 139 A1**

(12) **EUROPEAN PATENT APPLICATION**

(43) Date of publication:
**08.10.2025 Bulletin 2025/41**

(21) Application number: **25154086.0**

(22) Date of filing: **27.01.2025**

(51) International Patent Classification (IPC):
**G06N 5/01** $^{(2023.01)}$ **G06N 10/60** $^{(2022.01)}$

(52) Cooperative Patent Classification (CPC):
**G06N 5/01;** G06N 10/60

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **03.04.2024 JP 2024060359**

(71) Applicant: **Fujitsu Limited**
**Kawasaki-shi, Kanagawa 211-8588 (JP)**

(72) Inventor: **SAZAWA, Shinichi**
**Kawasaki-shi, 211-8588 (JP)**

(74) Representative: **Haseltine Lake Kempner LLP**
**Cheapside House**
**138 Cheapside**
**London EC2V 6BJ (GB)**

(54) **DATA PROCESSING PROGRAM, DATA PROCESSING METHOD, AND DATA PROCESSING DEVICE**

(57)    A data processing program for causing a computer to execute a process includes searching for a solution represented by a plurality of state variables, based on a first objective function of quadratic or higher order that relates to the plurality of state variables, in which the first objective function is represented by a sum of a plurality of first sub-functions, each of which has one term of which coefficients are positive or is a sum of two or more terms of which the coefficients are positive, and a plurality of second sub-functions, each of which has one term of which the coefficients are negative or is a sum of two or more terms of which the coefficients are negative, and when a first solution is reached in the search, continuing the search from the first solution, based on a second objective function obtained from the first objective function, in which the second objective function is obtained by multiplying at least one of the first sub-functions that include the terms that have positive values in the first solution among the plurality of first sub-functions and the second sub-functions that include the terms that have values of zero in the first solution among the plurality of second sub-functions, by a weight value greater than one.

FIG. 1

DATA PROCESSING DEVICE — 10

STORAGE UNIT — 11    PROCESSING UNIT — 12

EXAMPLE OF FIRST OBJECTIVE FUNCTION

$$z(x) := \sum_i c_i x_i + \sum_{i,j} c_{ij} x_i x_j + \sum_{i,j,k} c_{ijk} x_i x_j x_k + \cdots$$

$$z(x) = f_1(x) + \cdots + f_p(x) + g_1(x) + \cdots + g_s(x)$$

EXAMPLE OF SECOND OBJECTIVE FUNCTION

$$\check{z}(x) = \alpha_1 f_1(x) + \cdots + \alpha_p f_p(x) + \beta_1 g_1(x) + \cdots + \beta_s g_s(x)$$

EP 4 629 139 A1

**Description**

FIELD

The embodiments discussed herein are related to a program, a data processing method, and a data processing device.

BACKGROUND

An information processing device may sometimes be used to find a solution to a combinatorial optimization problem. The combinatorial optimization problem is formulated by an objective function indicating energy of an Ising model. The Ising model is a model representing a spin behavior of a magnetic material. The objective function is sometimes also called an energy function or an evaluation function.

The information processing device searches for, for example, a combination that minimizes a value of the objective function among combinations of values of a plurality of state variables included in the objective function. In this case, the combination of the values of the plurality of state variables that minimizes the value of the objective function correlates to a ground state or an optimal solution represented by a set of the state variables. Examples of an approach for obtaining an approximate solution to the combinatorial optimization problem in a practical time include a greedy method, a tabu search method, and the like.

Here, for example, there is a proposal of an information processing device that find a solution to a combinatorial optimization problem by an approach called a simulated bifurcation algorithm.

In addition, in order to solve a quadratic unconstrained binary optimization (QUBO) problem with a quantum annealing machine, there is a proposal for an allocation device that performs a process of allocating variables of the QUBO problem to a plurality of nodes on a chimera graph.

Furthermore, there is a proposal of a system that decomposes an optimization problem desired to be solved into two subproblems, allocates one subproblem to a classical computer, allocates the other subproblem to a quantum computer, and mutually transmits results of solution finding by the classical computer and the quantum computer.

Moreover, there is a proposal of a method for formulating root cause analysis (RCA) in QUBO in association with a minimum hitting set problem and solving the formulated RCA by a quantum annealing process.

Citation List

Patent document

Japanese Laid-open Patent Publication No. 2021-43667
Japanese Laid-open Patent Publication No. 2022-19432
U.S. Patent Application Publication No. 2022/0414518
U.S. Patent Application Publication No. 2022/0224590

SUMMARY

TECHNICAL PROBLEM

There is a problem that it takes time to find a solution to a problem represented by a higher order objective function such as QUBO or higher order binary optimization (HOBO). For example, if falling into a local solution in a search for a solution, it becomes hard to escape from the local solution, and it becomes difficult to obtain a better solution.

In one aspect, an object of the embodiments is to find a solution at higher speed.

SOLUTION TO PROBLEM

According to an aspect of the embodiments, a data processing program for causing a computer to execute a process includes searching for a solution represented by a plurality of state variables, based on a first objective function of quadratic or higher order that relates to the plurality of state variables, in which the first objective function is represented by a sum of a plurality of first sub-functions, each of which has one term of which coefficients are positive or is a sum of two or more terms of which the coefficients are positive, and a plurality of second sub-functions, each of which has one term of which the coefficients are negative or is a sum of two or more terms of which the coefficients are negative, and when a first solution is reached in the search, continuing the search from the first solution, based on a second objective function obtained from the first objective function, in which the second objective function is obtained by multiplying at least one of the first sub-functions that include the terms that have positive values in the first solution among the plurality of first sub-functions and the second sub-functions that include the terms that have values of zero in the first solution among the plurality of second sub-functions, by a weight value greater than one.

ADVANTAGEOUS EFFECTS OF INVENTION

In one aspect, a solution may be found at higher speed.

BRIEF DESCRIPTION OF DRAWINGS

FIG. 1 is a diagram explaining a data processing device according to a first embodiment;
FIG. 2 is a diagram illustrating a hardware example of a data processing device according to a second embodiment;
FIG. 3 is a diagram illustrating a functional example of the data processing device;
FIG. 4 is a flowchart illustrating a processing procedure of the data processing device;
FIG. 5 is a flowchart illustrating another processing procedure of the data processing device; and
FIG. 6 is a diagram illustrating an example of a solution search in which a weight to be multiplied to a constraint term is adaptively changed.

DESCRIPTION OF EMBODIMENTS

Hereinafter, the present embodiments will be described with reference to the drawings.

[First Embodiment]

A first embodiment will be described.

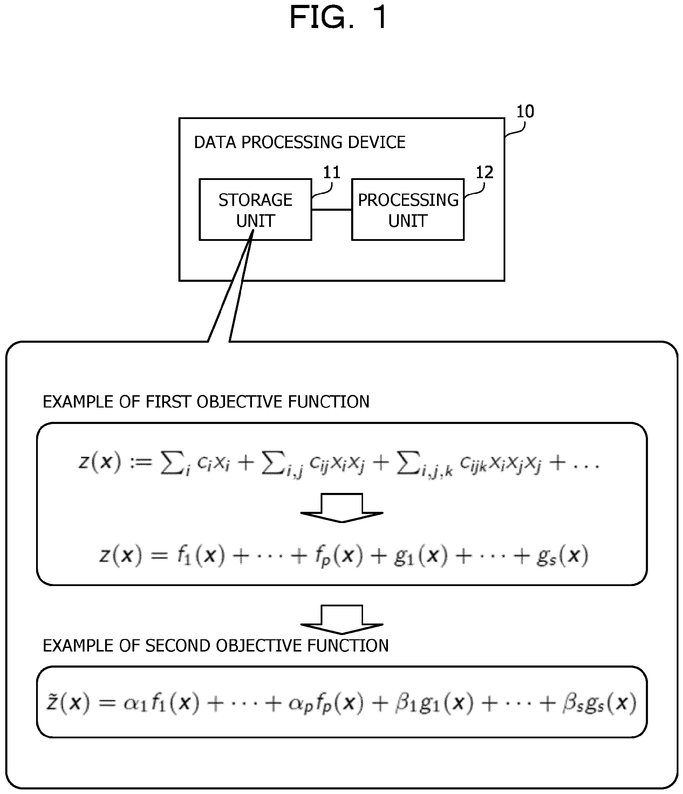

FIG. 1 is a diagram explaining a data processing device according to the first embodiment.
A data processing device 10 searches for a solution to a combinatorial optimization problem and outputs a solution retrieved in the search. The data processing device 10 includes a storage unit 11 and a processing unit 12.
The storage unit 11 may be a volatile semiconductor memory such as a random access memory (RAM) or may be a nonvolatile storage such as a hard disk drive (HDD) or a flash memory. The storage unit 11 may include an electronic circuit such as a register. The processing unit 12 is, for example, a processor such as a central processing unit (CPU), a graphics processing unit (GPU), or a digital signal processor (DSP). The processor may execute a program stored in a memory such as a RAM (the storage unit 11 is also acceptable). A set of a plurality of processors may be sometimes referred to as a "multiprocessor" or simply a "processor". The processing unit 12 may be a processor implemented by an electronic circuit for a specific application, such as an application specific integrated circuit (ASIC) or a field programmable gate array (FPGA).
The combinatorial optimization problem is formulated by an objective function indicating energy of an Ising model and is replaced with, for example, a problem of minimizing a value of the objective function. The objective function includes a plurality of state variables. The state variable is a binary variable that takes a value of 0 or 1. The state variable may be referred to as a bit. A solution to the combinatorial optimization problem is represented by values of the plurality of state variables.
For example, the value of the objective function, that is, a solution that minimizes the energy of the Ising model, represents a ground state of the Ising model and corresponds to an optimal solution to a combinatorial optimization problem. The combinatorial optimization problem is assumed to be formulated with an objective function $z(x)$ of QUBO or HOBO. That is, the objective function $z(x)$ includes quadratic or higher terms relating to the state variables. In this case, the objective function $z(x)$ is represented by, for example, Formula (1).
[Mathematical Formula 1]

$$z(\boldsymbol{x}) := \sum_i c_i x_i + \sum_{i,j} c_{ij} x_i x_j + \sum_{i,j,k} c_{ijk} x_i x_j x_k + \cdots \qquad (1)$$

A state vector x has the plurality of state variables as elements and represents a state of the Ising model. Real number coefficients are denoted by $c_i$, $c_{ij}$, $c_{ijk}$, and so forth. In a case of a problem of maximizing the value of the objective function, the sign of z(x) only needs to be reversed. The objective function z(x) may be referred to as a first objective function.

The processing unit 12 searches for a solution to a problem formulated by the objective function of Formula (1). First, the processing unit 12 divides respective terms of the objective function z(x) into two groups of a first group of terms having a positive coefficient c and a second group of terms having a negative coefficient c.

The processing unit 12 divides respective terms belonging to the first group into p (p is an integer equal to or greater than two) first subgroups. The number of terms included in the first subgroup is one or more. Various methods can be used for division into the p first subgroups. For example, the processing unit 12 may make division such that the sum of absolute values of the coefficients included in the terms is equal for each first subgroup. The processing unit 12 obtains p first sub-functions $f_1$, $f_2$, ..., and $f_p$ by taking a sum of terms belonging to the first subgroup for each first subgroup.

In addition, the processing unit 12 divides respective terms belonging to the second group into s (s is an integer equal to or greater than two) second subgroups. The number of terms included in the second subgroup is one or more. Various methods can be used for division into the s second subgroups. For example, the processing unit 12 may make division such that the sum of absolute values of the coefficients included in the terms is equal for each second subgroup. The processing unit 12 obtains s second sub-functions $g_1$, $g_2$, ..., and $g_s$ by taking a sum of terms belonging to the second subgroup for each second subgroup.

Then, the objective function z(x) of Formula (1) is represented as Formula (2), using the p first sub-functions $f_1$, ..., and $f_p$ and the s second sub-functions $g_1$, ..., and $g_s$.

[Mathematical Formula 2]

$$z(\boldsymbol{x}) = f_1(\boldsymbol{x}) + \cdots + f_p(\boldsymbol{x}) + g_1(\boldsymbol{x}) + \cdots + g_s(\boldsymbol{x}) \qquad (2)$$

The first sub-functions $f_1$, $f_2$, ..., and $f_p$ denote QUBO or HOBO in which the coefficients c are all positive. The second sub-functions $g_1$, $g_2$, ..., and $g_s$ denote QUBO or HOBO in which the coefficients c are all negative.

As an example, it is assumed that $z(x) = 3x_1x_2 + 6x_1x_3 + 5x_1x_2x_4 - 4x_2x_3 - x_1x_4 - x_1x_2x_3$ holds. In this case, the processing unit 12 can define, for example, $f_1(x) = 3x_1x_2$, $f_2 = 6x_1x_3 + 5x_1x_2x_4$, $g_1(x) = -4x_2x_3$, and $g_2(x) = -x_1x_4 - x_1x_2x_3$. Then, the processing unit 12 can obtain $z(x) = f_1(x) + f_2(x) + g_1(x) + g_2(x)$.

The processing unit 12 searches for a solution by the greedy method, based on the objective function z(x) of Formula (1) or Formula (2). The greedy method is also referred to as a greedy search method or a steepest descent method. The greedy method is an approach of searching for a solution by transitioning to a state with the lowest energy among the states of transition destination candidates of the current state. The state after the transition from the current state is a state in which the value of one state variable among values of the plurality of state variables corresponding to the current state is flipped. Here, in the greedy method, if there is no state having energy lower than that of the current state in the states of the transition destination candidates, the state transition will be hindered. In a case where there is no state of a transition destination candidate having lower energy than that of the current state, the current state is referred to as a local solution.

When a first solution is reached in the search based on the objective function z(x), the processing unit 12 continues the search from the first solution, based on an objective function z~(x) obtained from the objective function z(x). The first solution is, for example, a local solution. A character with a tilde symbol at the top of z is indicated by "z~". The objective function z~(x) is a function obtained by multiplying at least one of a first sub-function having a positive value in the first solution among the plurality of first sub-functions of Formula (2) and a second sub-function having a value of zero in the first solution among the plurality of second sub-functions, by a weight value greater than one. The weight values to be multiplied to each of the relevant first sub-function and second sub-function may have the same value or different values. The objective function z~(x) is commonly represented by Formula (3).

[Mathematical Formula 3]

$$\tilde{z}(\boldsymbol{x}) = \alpha_1 f_1(\boldsymbol{x}) + \cdots + \alpha_p f_p(\boldsymbol{x}) + \beta_1 g_1(\boldsymbol{x}) + \cdots + \beta_s g_s(\boldsymbol{x}) \qquad (3)$$

Weight vectors are denoted by $\alpha = (\alpha_1, \alpha_2, ..., \alpha_p)$ and $\beta = (\beta_1, \beta_2, ..., \beta_s)$. Each of the elements $\alpha_1$, ..., and $\alpha_p$ of $\alpha$ and the elements $\beta_1$, ..., and $\beta_s$ of $\beta$ correlates to a weight value. An initial value of each element of the weight vectors $\alpha$ and $\beta$ is one. In a case where all the elements of the weight vectors $\alpha$ and $\beta$ have one, the objective function z~(x) match the objective function z(x). The objective function z~(x) in a case where at least one element of a and $\beta$ is made greater than one may be referred to as a second objective function.

The processing unit 12 continues to search for a solution by the greedy method, based on the objective function z~(x). This ensures that, for example, the first solution that is a local solution in the objective function z(x) is no longer a local solution in the objective function z~(x) and promotes state transition. However, the processing unit 12 also calculates energy based on the objective function z(x) for the state obtained by the search with the objective function z~(x) and holds the calculated energy in the storage unit 11.

The processing unit 12 may hold the best energy calculated by the objective function $z(x)$ and the state corresponding to the best energy in the storage unit 11.

Here, the search with the objective function $z\sim(x)$ may sometimes further fall into a local solution (second solution). In that case, the processing unit 12 continues the search, based on an objective function in which the weight of each of the first sub-function including a term having a positive value in the second solution and the second sub-function including a term having a value of zero in the second solution among the plurality of second sub-functions are further made greater in Formula (3). Also for the state obtained by the search, the processing unit 12 calculates energy based on the initial objective function $z(x)$ and holds the calculated energy in the storage unit 11.

When the search for a certain period of time is completed, the processing unit 12 outputs the best energy and the state corresponding to the best energy, as a final solution. Alternatively, in a case where a state in which there is no term having a positive value in the first sub-functions $f_1$, ..., and $f_p$ and there is no term having zero in the second sub-functions $g_1$, ..., and $g_s$ is attained before the search for a certain period of time is completed, the processing unit 12 outputs the state as an optimal solution.

Note that, in the above example, the processing unit 12 has been assumed to use the greedy method to search for a solution, but other search approaches such as the tabu search method may be used.

According to the data processing device 10, a solution represented by a plurality of state variables is searched for based on the quadratic or higher order first objective function relating to the plurality of state variables. The first objective function is represented by a sum of a plurality of first sub-functions, each of which has one term of which coefficients are positive or is a sum of two or more terms of which the coefficients are positive, and a plurality of second sub-functions, each of which has one term of which the coefficients are negative or is a sum of two or more terms of which the coefficients are negative. When the first solution is reached in the search, the search is continued from the first solution, based on the second objective function obtained from the first objective function. The second objective function is a function obtained by multiplying at least one of a first sub-function including a term having a positive value in the first solution among the plurality of first sub-functions and a second sub-function including a term having a value of zero in the first solution among the plurality of second sub-functions, by a weight value greater than one. This may allow the data processing device 10 to find a solution at higher speed.

Here, in the first objective function, when the value of a certain state variable is flipped to 1 from 0, the evaluation value of the first sub-function (f) is non-decreasing, and the evaluation value of the second sub-function (g) is non-increasing. In a case where the value of a certain state variable is flipped to 0 from 1, the above is reversed.

In addition, if the solution is not an optimal solution, it is possible to truly decrease one of the first sub-functions (f) by flipping k state variables at most to 0 from 1, or to truly decrease one of the second sub-functions (g) by flipping k state variables at most to 1 from 0, for the k-th order HOBO.

Thus, the processing unit 12 uses the second objective function obtained by updating, in the first objective function, each coefficient of a first sub-function including a term having a positive value in the first solution and a second sub-function including a term having a value of zero in the first solution among the plurality of second sub-functions, to a sufficiently large value. This allows the processing unit 12 to produce a transition destination candidate that makes an energy change amount $(\Delta z\sim)$ in the second objective function negative. This means that the original solution (first solution) is no longer a local solution in the second objective function. Accordingly, the processing unit 12 may achieve escape from the first solution and efficiently continue the search for a good solution. In this manner, the data processing device 10 may raise the possibility of attaining a good solution in a short time and may find a solution at higher speed.

[Second Embodiment]

Next, a second embodiment will be described.

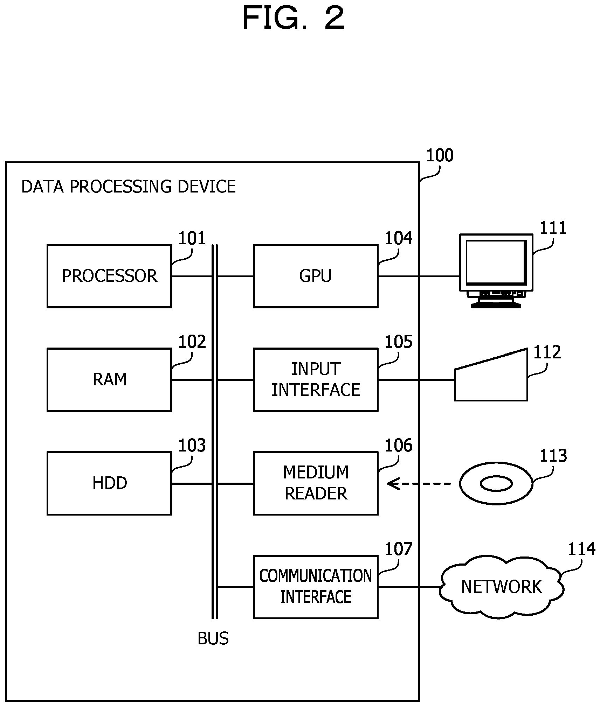

FIG. 2 is a diagram illustrating a hardware example of a data processing device according to the second embodiment.

A data processing device 100 searches for a solution to a combinatorial optimization problem, using the greedy method, the tabu search method, or the like, and outputs the solution retrieved in the search. The combinatorial optimization problem is formulated with an objective function of QUBO or HOBO and is replaced with a problem of minimizing the value of the objective function. The objective function is represented by following Formula (1).

The data processing device 100 includes a processor 101, a RAM 102, an HDD 103, a GPU 104, an input interface 105, a medium reader 106, and a communication interface 107. These units included in the data processing device 100 are coupled to a bus inside the data processing device 100. The processor 101 corresponds to the processing unit 12 of the first embodiment. The RAM 102 or the HDD 103 corresponds to the storage unit 11 of the first embodiment.

The processor 101 is an arithmetic device that executes a program command. The processor 101 is, for example, a CPU. The processor 101 loads at least a part of a program and data stored in the HDD 103 into the RAM 102 and executes the program. Note that the processor 101 may include a plurality of processor cores. In addition, the data processing device 100 may include a plurality of processors. Processing to be described below may be executed in parallel, using a plurality of processors or processor cores. Furthermore, a set of a plurality of processors may be sometimes referred to as a "multiprocessor" or simply a "processor". In addition, the processor may be called "processor circuitry".

The RAM 102 is a volatile semiconductor memory that temporarily stores a program to be executed by the processor 101 and data to be used by the processor 101 for arithmetic operations. Note that the data processing device 100 may include a memory of a type other than the RAM, or may include a plurality of memories.

The HDD 103 is a nonvolatile storage device that stores software programs such as an operating system (OS), middleware, and application software, and data. Note that the data processing device 100 may include another type of storage device such as a flash memory or a solid state drive (SSD), or may include a plurality of nonvolatile storage devices.

The GPU 104 outputs an image to a display 111 coupled to the data processing device 100 in accordance with a command from the processor 101. As the display 111, any type of display such as a cathode ray tube (CRT) display, a liquid crystal display (LCD), a plasma display, or an organic electroluminescence (OEL) display can be used.

The input interface 105 acquires input signals from an input device 112 coupled to the data processing device 100 and outputs the input signals to the processor 101. As the input device 112, a pointing device such as a mouse, a touch panel, a touch pad, or a trackball, a keyboard, a remote controller, a button switch, or the like can be used. In addition, a plurality of types of input devices may be coupled to the data processing device 100.

The medium reader 106 is a reading device that reads a program and data recorded on a recording medium 113. As the recording medium 113, for example, a magnetic disk, an optical disc, a magneto-optical (MO) disk, a semiconductor memory, or the like can be used. The magnetic disk includes a flexible disk (FD) and an HDD. The optical disc includes a compact disc (CD) and a digital versatile disc (DVD).

The medium reader 106 copies, for example, a program and data read from the recording medium 113 to another recording medium such as the RAM 102 or the HDD 103. The read program is executed by, for example, the processor 101. Note that the recording medium 113 may be a portable recording medium and may be sometimes used for distribution of a program and data. In addition, the recording medium 113 and the HDD 103 may be sometimes referred to as computer-readable recording media.

The communication interface 107 is coupled to a network 114 and communicates with another information processing device via the network 114. The communication interface 107 may be a wired communication interface coupled to a wired communication device such as a switch or a router, or may be a wireless communication interface coupled to a wireless communication device such as a base station or an access point.

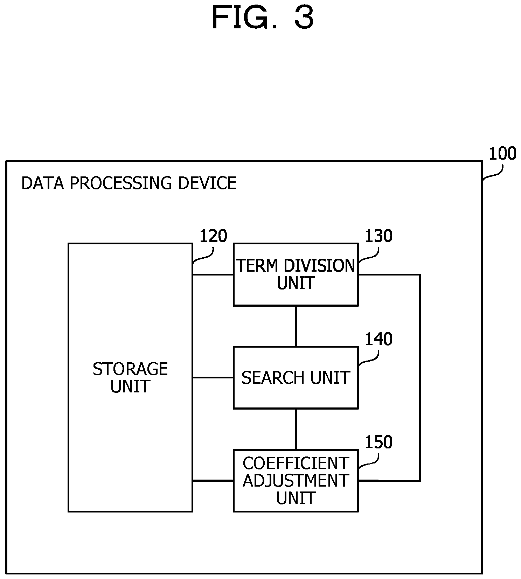

FIG. 3 is a diagram illustrating a functional example of the data processing device.

The data processing device 100 includes a storage unit 120, a term division unit 130, a search unit 140, and a coefficient adjustment unit 150. A storage area of the RAM 102 or the HDD 103 is used as the storage unit 120. The term division unit 130, the search unit 140, and the coefficient adjustment unit 150 are implemented by the processor 101 executing a program stored in the RAM 102.

The storage unit 120 stores data used for processing of the term division unit 130, the search unit 140, and the coefficient adjustment unit 150.

The term division unit 130 divides respective terms of the objective function z(x) of Formula (1) into two groups of a first group of terms having a positive coefficient c and a second group of terms having a negative coefficient c.

The term division unit 130 divides respective terms belonging to the first group into p (p is an integer equal to or greater than two) first subgroups. The number of terms included in the first subgroup is one or more. Various methods can be used for division into the p first subgroups. For example, the term division unit 130 may make division such that the sum of absolute values of the coefficients included in the terms is equal for each first subgroup. The term division unit 130 obtains p first sub-functions $f_1$, $f_2$, ..., and $f_p$ by taking a sum of terms belonging to the first subgroup for each first subgroup.

In addition, the term division unit 130 divides respective terms belonging to the second group into s (s is an integer equal to or greater than two) second subgroups. The number of terms included in the second subgroup is one or more. Various methods can be used for division into the s second subgroups. For example, the term division unit 130 may make division such that the sum of absolute values of the coefficients included in the terms is equal for each second subgroup. The term division unit 130 obtains s second sub-functions $g_1$, $g_2$, ..., and $g_s$ by taking a sum of terms belonging to the second subgroup for each second subgroup.

Then, the objective function z(x) of Formula (1) is represented as Formula (2), using the p first sub-functions $f_1$, ..., and $f_p$ and the s second sub-functions $g_1$, ..., and $g_s$.

Here, as a way of separating into a plurality of first subgroups and a plurality of second subgroups by the term division unit 130, for example, there is the division method as follows. As an example, $p = s = 10$ is assumed.

First, the term division unit 130 divides respective terms included in Formula (1) into two by coefficients in terms of positive and negative. This separates the respective terms into the first group in which the coefficient is positive and the second group in which the coefficient is negative.

Next, the term division unit 130 creates a sequence in which the order of the respective terms belonging to the first group is randomly rearranged. The term division unit 130 creates a sequence in which the order of the respective terms belonging to the second group is randomly rearranged.

Then, the term division unit 130 finds a sum A of absolute values of the coefficients of the respective terms belonging to the first group. The term division unit 130 successively finds cumulative sums of absolute values of the coefficients from an end of the sequence, for the sequence of the terms created for the first group, and defines a group of terms corresponding to the coefficients included in a cumulative sum at a point when the cumulative sum reaches A/10, as one first subgroup. By sequentially repeating this, the term division unit 130 obtains 10 first subgroups.

Similarly, the term division unit 130 finds a sum B of absolute values of the coefficients of the respective terms belonging to the second group. The term division unit 130 successively finds cumulative sums of absolute values of the coefficients from an end of the sequence, for the sequence of the terms created for the second group, and defines a group of terms corresponding to the coefficients included in a cumulative sum at a point when the cumulative sum reaches B/10, as one second subgroup. By sequentially repeating this, the term division unit 130 obtains 10 second subgroups.

In this manner, the term division unit 130 conducts classification into a plurality of first sub-functions such that a difference between total sums of the coefficients for each first sub-function is lessened, that is, the total sums become equal. In addition, the term division unit 130 classifies terms having negative coefficients among a plurality of terms included in the original objective function into a plurality of second sub-functions such that a difference between total sums of absolute values of the coefficients for each second sub-function is lessened, that is, the total sums become equal.

The term division unit 130 obtains the objective function $z\sim(x)$ of Formula (3) by multiplying each term of the objective function of Formula (2) by weight coefficients $\alpha_1$, ..., and $\alpha_p$, and $\beta_1$, ..., and $\beta_s$. The term division unit 130 sets initial values of the weight coefficients $\alpha_1$, ..., and $\alpha_p$, and $\beta_1$, ..., and $\beta_s$ to one. That is, in an initial stage, $z\sim(x) = z(x)$ holds. Note that the weight coefficient may be referred to as a weight value.

The search unit 140 searches for a solution as follows, based on an Ising type objective function.

First, the search unit 140 searches for a solution, based on the objective function $z\sim(x) = z(x)$ of Formula (3) with the weight coefficients $\alpha_1$, ..., and $\alpha_p$, and $\beta_1$, ..., and $\beta_s$ defined to be one as the initial value. The search unit 140 uses the greedy method to search for a solution. The search unit 140 may use another search approach such as the tabu search method, for example.

The search by the search unit 140 may sometimes fall into a local solution. For example, in a case where there is no next state of a transition destination candidate of the current state that enhances energy, the search unit 140 detects to have fallen into a local solution and notifies the coefficient adjustment unit 150 of having fallen into the local solution.

When the search by the search unit 140 has fallen into a local solution, the coefficient adjustment unit 150 updates the weight coefficients $\alpha_1$, ..., and $\alpha_p$, and $\beta_1$, ..., and $\beta_s$ of Formula (3) as follows. The coefficient adjustment unit 150 makes the weight coefficient of the first sub-function including a term having a positive value in the local solution greater, among the first sub-functions $f_1, f_2, ..., $ and $f_p$ included in the objective function of Formula (3) in the immediately preceding search. In addition, the coefficient adjustment unit 150 makes the weight coefficient of the second sub-function including a term having a value of zero in the local solution greater, among the plurality of second sub-functions $g_1, g_2, ..., $ and $g_s$ included in the objective function of Formula (3).

Then, the search unit 140 continues to search for a solution, based on the objective function $z\sim(x)$ after the weight coefficients have been adjusted by the coefficient adjustment unit 150. When the search by the search unit 140 falls into a local solution again, the above procedure is repeated in such a manner that the weight coefficients are adjusted by the coefficient adjustment unit 150 and the search unit 140 searches for a solution. In the course of the above, the search unit 140 calculates the value of the objective function $z\sim(x) = z(x)$ of Formula (3) with the weight coefficients $\alpha_1$, ..., and $\alpha_p$, and $\beta_1$, ..., and $\beta_s$ defined to be one as the initial value, for each solution, and records a solution having the best energy, in the storage unit 120.

In addition, when obtaining a solution in which there is no term having a positive value in the local solution among the first sub-functions $f_1, f_2, ..., f_p$ and there is no term having a value of zero in the local solution among the plurality of second sub-functions $g_1, g_2, ..., $ and $g_s$, the search unit 140 treats that solution as an optimal solution and ends the search.

In a case where an optimal solution is obtained, the search unit 140 outputs the optimal solution. Meanwhile, even if no optimal solution is obtained, the search unit 140 ends the search when the search has been performed for a certain period of time, acquires the best solution recorded until then from the storage unit 120, and outputs the solution.

Next, a processing procedure of the data processing device 100 will be described.

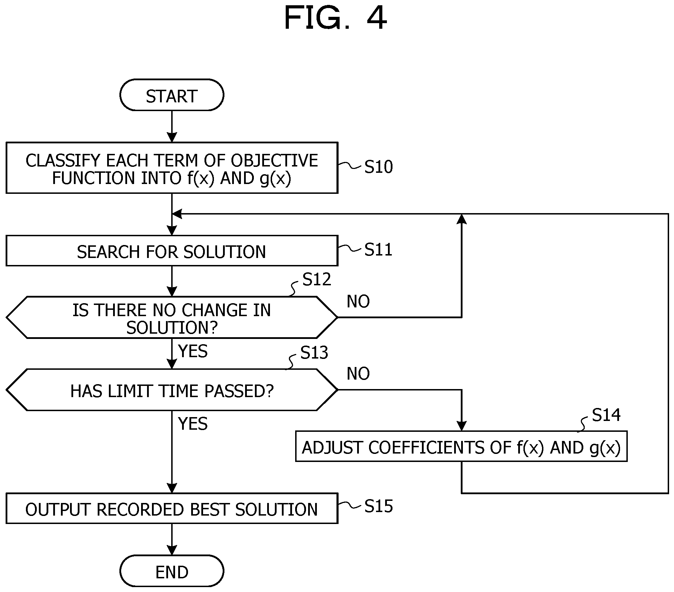

FIG. 4 is a flowchart illustrating a processing procedure of the data processing device.

(S10) When the objective function $z(x)$ of QUBO or HOBO represented by Formula (1) is input, the term division unit 130 classifies each term of $z(x)$ into the first sub-function $f(x)$ and the second sub-function $g(x)$ depending on the positive or negative of the coefficient. This ensures that the term division unit 130 obtains the objective function of Formula (2). Here, the objective function $z(x)$ is assumed as $z(x) = f_1 + f_2 + ... - g_1 - g_2 - ...$. Note that all the coefficients of the terms included in the function $f_i$ are positive. In addition, here, the coefficients of the terms included in the function $g_i$ are also all positive because the coefficients are enclosed by negative signs. If the negative sign is included in the function $g_i$, the same formula as Formula (2) is obtained. The term division unit 130 initializes all the weight coefficients $\alpha_1$, ..., and $\alpha_p$, and $\beta_1$, ...,

and $\beta_s$ of the evaluation function $z\sim(x)$ to one. At this time, $z\sim(x) = z(x)$ holds.

(S11) The search unit 140 searches for a solution by the greedy method, based on $z\sim(x) = \alpha_1 f_1 + \alpha_2 f_2 + ... - \beta_1 g_1 - \beta_2 g_2 - ...$ to obtain a local solution x. For the solution x obtained in the search, the search unit 140 also calculates the value (energy) of the intact objective function z(x) in which each sub-function is not multiplied by the weight coefficients $\alpha_1$, ..., and $\alpha_p$, and $\beta_1$, ..., and $\beta_s$ and, when the best solution is updated, records the updated best solution and its energy in the storage unit 120.

(S12) In the search, the search unit 140 determines whether or not there is no longer a change in the solution. In a case where there is no longer a change in the solution, the process proceeds to step S13. In a case where there is a change in the solution, the process proceeds to step S11. The fact that there is no longer a change in the solution means that the solution falls into a local solution. For example, the search unit 140 can determine that there is no longer a change in the solution in a case where there is no state of a transition destination candidate that improves the energy with respect to the current state.

(S13) The search unit 140 determines whether or not preset limit time has passed from the search start time. In a case where the limit time has passed, the process proceeds to step S15. In a case where the limit time has not passed, the process proceeds to step S14.

(S14) The coefficient adjustment unit 150 adjusts the weight coefficients $\alpha_1$, ..., and $\alpha_p$, and $\beta_1$, ..., and $\beta_s$ of f(x) and g(x) in Formula (3). Specifically, the coefficient adjustment unit 150 makes the weight coefficient of the first sub-function including a term having a positive value in the local solution of immediately preceding step S12 greater, among the first sub-functions $f_1, f_2, ..., $ and $f_p$ included in the objective function of Formula (3). In addition, the coefficient adjustment unit 150 makes the weight coefficient of the second sub-function including a term having a value of zero in the local solution of immediately preceding step S12 greater, among the plurality of second sub-functions $g_1, g_2, ..., $ and $g_s$ included in the objective function of Formula (3). Then, the process proceeds to step S11.

(S15) The search unit 140 outputs the best solution recorded in the storage unit 120. Then, the process of the data processing device 100 ends.

Here, in step S14, the coefficient adjustment unit 150 can adjust the weight coefficients as follows, for example. The coefficient adjustment unit 150 randomly selects a predetermined number of terms from among terms of f(x) being positive and terms of g(x) having zero and multiplies the coefficients of the sub-functions f or g including the selected terms, by $\alpha$. For example, $\alpha = 2$ is adopted. Note that the predetermined number to be selected is designated in advance. For example, the predetermined number may be designated in advance such as the predetermined number = 1 or the predetermined number = 2. Alternatively, for the k-th order problem, the predetermined number = k may be adopted, and the predetermined number = r may be adopted if the total number r of terms of f(x) being positive and terms of g(x) having zero is less than k.

For example, in a case where the weight of f(x) is made greater, the cost of the term included in f(x) becomes very large, and thus, in the search for a solution by the greedy method, the solution moves in a direction of making the relevant term have zero. In addition, in a case where the weight of g(x) is made greater, $z\sim(x)$ becomes smaller if the cost of the term included in g(x) becomes non-zero, and thus, in the search for a solution by the greedy method, the solution moves in a direction of making the relevant term non-zero. In this manner, escape from the local optimal solution may be enabled.

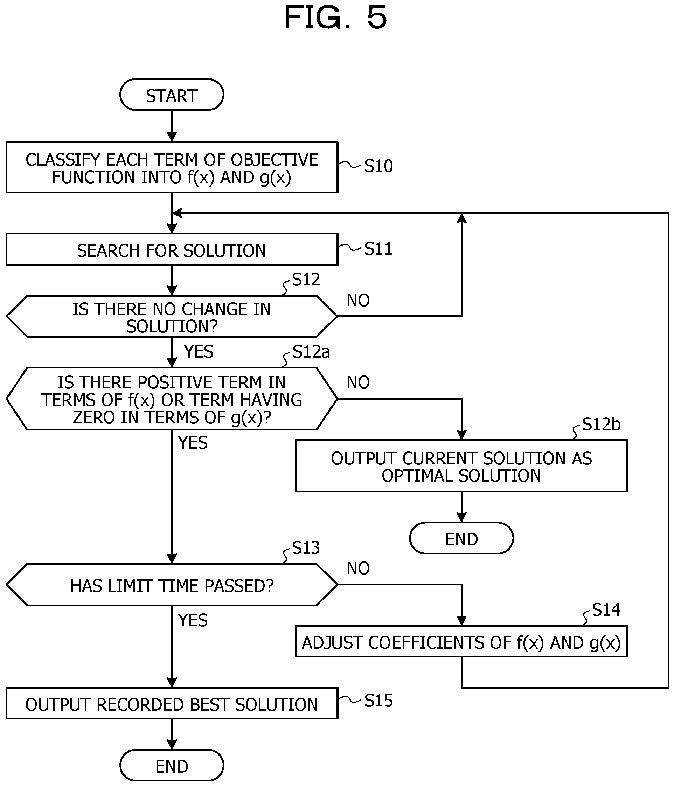

FIG. 5 is a flowchart illustrating another processing procedure of the data processing device.

The data processing device 100 may execute following steps S12a and S12b besides the procedure in FIG. 4. Step S12a is executed in a case of Yes in step S12. Hereinafter, steps S12a and S12b will be mainly described, and description of steps S10 to S12 and steps S13 to S15 will be omitted.

(S12a) The search unit 140 determines whether or not there is a positive term in the terms of f(x) = {$f_1, ..., f_p$} or a term having zero in the terms of g(x) = {$g_1, ..., g_s$} for the local solution obtained in immediately preceding step S12. In a case where there is a positive term in the terms of f(x) = {$f_1, ..., f_p$} or there is a term having zero in the terms of g(x) = {$g_1, ..., g_s$}, the process proceeds to step S13. In a case where there is neither a positive term in the terms of f(x) = {$f_1, ..., f_p$} nor a term having zero in the terms of g(x) = {$g_1, ..., g_s$}, the process proceeds to step S12b.

(S12b) The search unit 140 outputs the current solution as an optimal solution. Then, the process of the data processing device 100 ends. Here, in a case where there is no positive term among the terms each included in the first sub-functions $f_1, ..., $ and $f_p$ and there is no term having zero among the terms each included in the second sub-functions $g_1, ..., $ and $g_s$, not only the value of Formula (3) but also the value of Formula (1) will take a minimum value. Therefore, in a case where there is no positive term among the terms each included in the first sub-functions $f_1, ..., f_p$ and there is no term having zero among the terms each included in the second sub-functions $g_1, ..., g_s$, the search unit 140 can define the relevant solution as an optimal solution.

In this manner, the search unit 140 may be allowed to efficiently escape from the local solution and may find a solution at higher speed. In addition, the search unit 140 may raise the possibility of attaining an optimal solution.

Here, as a comparative example, a method of finding a solution to a binary integer linear optimization problem with n variables will be described. Reference can be made to following Document 1 for the method of the comparative example indicated below.

Document 1: Umetani, "Exploiting variable associations to configure efficient local search algorithms in large-scale binary integer programs", European Journal of Operational Research 263, 2017, p. 72 - 81

The binary integer linear optimization problem with the n variables of the comparative example is represented by, for example, Formula (4).

[Mathematical Formula 4]

$$\text{Minimize} \quad \sum_{j=1}^{n} c_j x_j$$
$$\text{subject to} \quad \sum_{j=1}^{n} a_{ij} x_j \leq b_i \quad i = 1, \ldots, m \tag{4}$$
$$x_j \in \{0, 1\} \quad j = 1, \ldots, n$$

The problem of Formula (4) resolves into unconstrained optimization of the objective function indicated by Formula (5) using a positive real number coefficient $w_i$ and can be solved.

[Mathematical Formula 5]

$$\text{Minimize} \quad \sum_{j=1}^{n} c_j x_j + \sum_{i=1}^{m} w_i \max \left( 0, \sum_{j=1}^{n} a_{ij} x_j - b_i \right) \tag{5}$$

That is, a value obtained by multiplying a degree of violation against each constraint i by the weight $w_i$ is added to the objective function as a penalty. The weight $w_i$ is adaptively adjusted.

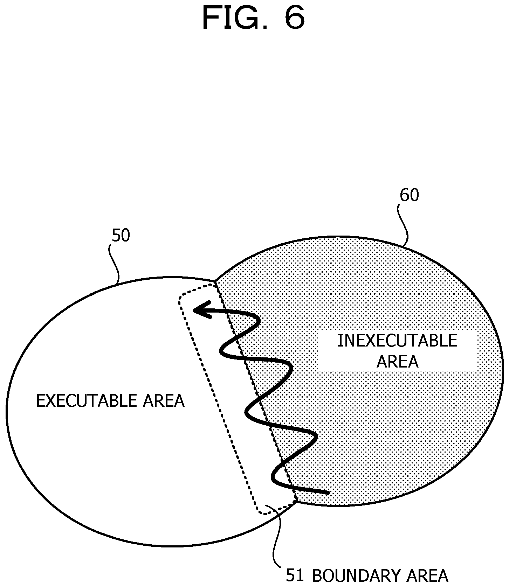

FIG. 6 is a diagram illustrating an example of a solution search in which a weight to be multiplied to a constraint term is adaptively changed.

When $w_i$ in Formula (5) is updated, the objective function is altered. The local optimal solution to update $w_i$ is no longer the local optimal solution after the update of $w_i$. Thus, in the problem represented by Formula (5), it is possible to escape from the local optimal solution by a combination of the dynamic update of $w_i$ and the greedy method.

By adjusting the weight $w_i$ of Formula (5), the constraint condition is relaxed, and not only states in an executable area 50 that can be normally attained, but also states in an inexecutable area 60 that may not be attained normally can be attained. Then, it becomes easy to search for a solution inside the executable area 50 but belonging to a boundary area 51 between the executable area 50 and the inexecutable area 60, by way of the states in the inexecutable area 60. Therefore, it becomes easy to locate a good solution existing in the boundary area 51.

Note that, in a case where the objective function is linear, a state variable for which the coefficient of the objective function is non-negative is defined to be zero, and a state variable for which the coefficient of the objective function is negative is defined to be one, which is an obvious optimal solution if there is no constraint.

However, the method of the comparative example has a problem that it may be infeasible to cope with a quadratic problem (QUBO) or a higher-order problem (HOBO) without constraint.

Thus, in Formula (2) or (3), the data processing device 100 updates the coefficient of each of the first sub-function $f_k$ including a term having a positive value in the local solution and the second sub-function $g_l$ including a term having a value of zero in the local solution, to a sufficiently large value, and continues the search for a solution. The data processing device 100 can produce a transition destination candidate that makes the energy change amount ($\Delta z\sim$) negative in the updated objective function. This means that the local solution in the objective function before the update is no longer the local solution in the updated objective function. Accordingly, the data processing device 100 may achieve escape from the local solution and efficiently continue the search for a good solution. In this manner, the data processing device 100 may raise the possibility of attaining a good solution in a short time and may find a solution at higher speed.

It can be said that the data processing device 100 executes, for example, the following processes.

The processor 101 searches for a solution represented by a plurality of state variables, based on the quadratic or higher order first objective function relating to the plurality of state variables. The first objective function is represented by a sum of a plurality of first sub-functions, each of which has one term of which coefficients are positive or is a sum of two or more terms of which the coefficients are positive, and a plurality of second sub-functions, each of which has one term of which the coefficients are negative or is a sum of two or more terms of which the coefficients are negative. For the solution search, for example, the greedy method, the tabu search method, or the like is used. When the first solution is reached in the search, the processor 101 continues the search from the first solution, based on the second objective function obtained from the first objective function. The second objective function is obtained by multiplying at least one of a first sub-function including a term having a positive value in the first solution among the plurality of first sub-functions and a second sub-function including a term having a value of zero in the first solution among the plurality of second sub-functions, by a weight value greater than one.

This may allow the data processing device 100 to find a solution at higher speed. For example, even in a case where the state transition stagnates in the first solution, it may be possible to escape from the first solution, continue the search efficiently, and raise the possibility of attaining a better solution. Note that the storage unit 120 such as the RAM 102 stores information on the first objective function and information on the second objective function. The processor 101 searches for a solution, based on the information stored in the storage unit 120.

In addition, the processor 101 classifies terms having positive coefficients among a plurality of terms included in the quadratic or higher order original objective function relating to the plurality of state variables into a plurality of first sub-functions such that a difference between total sums of the coefficients for each first sub-function is lessened. In addition, the processor 101 classifies terms having negative coefficients among a plurality of terms included in the original objective function into a plurality of second sub-functions such that a difference between total sums of absolute values of the coefficients for each second sub-function is lessened.

This may allow the data processing device 100 to efficiently acquire the plurality of first sub-functions and the plurality of second sub-functions and to obtain the first objective function. The objective function in Formula (1) is an example of the original objective function. The objective function in Formula (2) is an example of the first objective function. The objective function in Formula (3) represents a common form of the second objective function. In a case of $\alpha_1 = \alpha_2 = ... = \alpha_p = \beta_1 = \beta_2 = ... = \beta_s = 1$ in Formula (3), Formula (3) is the same as Formula (2).

In addition, when the first solution is reached in the search, the processor 101 selects a predetermined number of terms from among terms having a positive value in the first solution among the terms of the plurality of first sub-functions and terms having a value of zero in the first solution among the terms of the plurality of second sub-functions. The processor 101 generates the second objective function by multiplying the first sub-functions and the second sub-functions each including the selected predetermined number of terms, by a weight value greater than one.

This may allow the data processing device 100 to efficiently generate the second objective function. For example, the processor 101 may randomly select the predetermined number of terms, or may select the predetermined number of terms in accordance with a predetermined criterion such as preferentially selecting a term for which long time has passed since the weight value is last changed.

In addition, the processor 101 outputs the first solution as an optimal solution in a case where there is no term having a positive value in the first solution among the plurality of first sub-functions and there is no term having a value of zero in the first solution among the plurality of second sub-functions. This may allow the data processing device 100 to efficiently acquire an optimal solution.

In addition, the processor 101 calculates the values of the original objective function corresponding to the solutions obtained in the search with the first objective function and the second objective function, holds a solution having a best value of the original objective function in the storage unit 120, and outputs the best solution held in the storage unit 120 when the search has been performed for a certain period of time. This may allow the data processing device 100 to efficiently acquire a better solution.

In addition, the processor 101 detects that the first solution has been reached, when the value of the first objective function is no longer improved in the search. This may allow the data processing device 100 to appropriately detect that the solution has fallen into the local solution, in the greedy method or the tabu search method. In addition, the data processing device 100 may appropriately detect a timing of switching to the search with the second objective function.

Note that the information processing of the first embodiment can be implemented by causing the processing unit 12 to execute a program. In addition, the information processing of the second embodiment can be implemented by causing the processor 101 to execute the program. The program can be recorded on the computer-readable recording medium 113.

For example, the program can be distributed by distributing the recording medium 113 on which the program is recorded. In addition, the program may be stored in another computer and distributed through a network. For example, a computer may store (install), in a storage device such as the RAM 102 or the HDD 103, the program recorded on the recording medium 113 or received from another computer and read the program from the storage device to execute the program.

**Claims**

**1.** A data processing program for causing a computer to execute a process comprising:

searching for a solution represented by a plurality of state variables, based on a first objective function of quadratic or higher order that relates to the plurality of state variables, in which the first objective function is represented by a sum of a plurality of first sub-functions, each of which has one term of which coefficients are positive or is a sum of two or more terms of which the coefficients are positive, and a plurality of second sub-functions, each of which has one term of which the coefficients are negative or is a sum of two or more terms of which the coefficients are negative; and

when a first solution is reached in the search, continuing the search from the first solution, based on a second objective function obtained from the first objective function, in which the second objective function is obtained by multiplying at least one of the first sub-functions that include the terms that have positive values in the first solution among the plurality of first sub-functions and the second sub-functions that include the terms that have values of zero in the first solution among the plurality of second sub-functions, by a weight value greater than one.

2. The data processing program according to claim 1, for causing the computer to execute the process comprising classifying the terms of which the coefficients are positive among a plurality of terms included in an original objective function of quadratic or higher order that relates to the plurality of state variables, into the plurality of first sub-functions such that a difference between total sums of the coefficients for each of the first sub-functions is lessened, and classifying the terms of which the coefficients are negative among the plurality of terms included in the original objective function into the plurality of second sub-functions such that the difference between the total sums of absolute values of the coefficients for each of the second sub-functions is lessened.

3. The data processing program according to claim 1 or claim 2, for causing the computer to execute the process comprising

when the first solution is reached in the search, selecting a predetermined number of terms from among the terms that have the positive values in the first solution among the terms of the plurality of first sub-functions and the terms that have the values of zero in the first solution among the terms of the plurality of second sub-functions, and generating the second objective function by multiplying the first sub-functions and the second sub-functions that include each of the selected predetermined number of terms, by the weight value greater than one.

4. The data processing program according to any preceding claim, for causing the computer to execute the process comprising

in a case where there is not any of the terms that have the positive values in the first solution among the plurality of first sub-functions and there is not any of the terms that have the values of zero in the first solution among the plurality of second sub-functions, outputting the first solution as an optimal solution.

5. The data processing program according to claim 2, for causing the computer to execute the process comprising calculating the values of the original objective function that correspond to solutions obtained in the search with the first objective function and the second objective function, holding the solutions that have a best value of the original objective function in a storage unit, and outputting the solutions that have the best value of the original objective function and are held in the storage unit, when the search has been performed for a certain period of time.

6. The data processing program according to any of preceding claim, for causing the computer to execute the process comprising

detecting that the first solution has been reached when the values of the first objective function are no longer improved in the search.

7. A data processing method implemented by a computer, the data processing method comprising:

searching for a solution represented by a plurality of state variables, based on a first objective function of quadratic or higher order that relates to the plurality of state variables, in which the first objective function is represented by a sum of a plurality of first sub-functions, each of which has one term of which coefficients are positive or is a sum of two or more terms of which the coefficients are positive, and a plurality of second sub-functions, each of which has one term of which the coefficients are negative or is a sum of two or more terms of which the coefficients are negative; and

when a first solution is reached in the search, continuing the search from the first solution, based on a second objective function obtained from the first objective function, in which the second objective function is obtained by multiplying at least one of the first sub-functions that include the terms that have positive values in the first solution among the plurality of first sub-functions and the second sub-functions that include the terms that have values of zero in the first solution among the plurality of second sub-functions, by a weight value greater than one.

8. A data processing device comprising:

a storing unit configured to store a first objective function of quadratic or higher order that relates to the plurality of state variables, in which the first objective function is represented by a sum of a plurality of first sub-functions, each of which has one term of which coefficients are positive or is a sum of two or more terms of which the coefficients are positive, and a plurality of second sub-functions, each of which has one term of which the coefficients are negative or is a sum of two or more terms of which the coefficients are negative; and
a processing unit configured to
search for a solution represented by a plurality of state variables, based on the first objective function,
when a first solution is reached in the search, continue the search from the first solution, based on a second objective function obtained from the first objective function, in which the second objective function is obtained by multiplying at least one of the first sub-functions that include the terms that have positive values in the first solution among the plurality of first sub-functions and the second sub-functions that include the terms that have values of zero in the first solution among the plurality of second sub-functions, by a weight value greater than one.

# FIG. 1

DATA PROCESSING DEVICE 10

STORAGE UNIT 11 — PROCESSING UNIT 12

EXAMPLE OF FIRST OBJECTIVE FUNCTION

$$z(\boldsymbol{x}) := \sum_i c_i x_i + \sum_{i,j} c_{ij} x_i x_j + \sum_{i,j,k} c_{ijk} x_i x_j x_j + \cdots$$

$$z(\boldsymbol{x}) = f_1(\boldsymbol{x}) + \cdots + f_p(\boldsymbol{x}) + g_1(\boldsymbol{x}) + \cdots + g_s(\boldsymbol{x})$$

EXAMPLE OF SECOND OBJECTIVE FUNCTION

$$\tilde{z}(\boldsymbol{x}) = \alpha_1 f_1(\boldsymbol{x}) + \cdots + \alpha_p f_p(\boldsymbol{x}) + \beta_1 g_1(\boldsymbol{x}) + \cdots + \beta_s g_s(\boldsymbol{x})$$

# FIG. 2

DATA PROCESSING DEVICE                                          100

PROCESSOR  101

RAM  102

HDD  103

GPU  104 ————— 111

INPUT INTERFACE  105 ————— 112

MEDIUM READER  106 ← - - - - 113

COMMUNICATION INTERFACE  107 ————— NETWORK 114

BUS

# FIG. 3

100

DATA PROCESSING DEVICE

120
TERM DIVISION
UNIT

130

STORAGE
UNIT

140
SEARCH UNIT

150
COEFFICIENT
ADJUSTMENT
UNIT

# FIG. 4

```
                    ┌─────────────┐
                    │    START    │
                    └──────┬──────┘
                           ↓
        ┌──────────────────────────────────┐
        │ CLASSIFY EACH TERM OF OBJECTIVE   │ ~S10
        │  FUNCTION INTO f(x) AND g(x)      │
        └──────────────────┬───────────────┘
                           ↓
        ┌──────────────────────────────────┐
        │       SEARCH FOR SOLUTION        │ ~S11
        └──────────────────┬───────────────┘
                           ↓         S12
        ╱─────────────────────────────╲   NO
        │   IS THERE NO CHANGE IN      │─────────┐
        │         SOLUTION?            │         │
        ╲─────────────────┬───────────╱         │
                   YES    ↓      S13             │
        ╱─────────────────────────────╲   NO     │
        │    HAS LIMIT TIME PASSED?    │────┐    │
        ╲─────────────────┬───────────╱    │    │
                   YES    ↓                │    │
                          │     ┌──────────────────────────────────┐
                          │     │ ADJUST COEFFICIENTS OF f(x) AND g(x) │ ~S14
                          │     └──────────────────────────────────┘
        ┌──────────────────────────────────┐
        │   OUTPUT RECORDED BEST SOLUTION   │ ~S15
        └──────────────────┬───────────────┘
                           ↓
                    ┌─────────────┐
                    │     END     │
                    └─────────────┘
```

# FIG. 5

START

CLASSIFY EACH TERM OF OBJECTIVE FUNCTION INTO f(x) AND g(x) — S10

SEARCH FOR SOLUTION — S11

S12
IS THERE NO CHANGE IN SOLUTION?   NO

YES   S12a

IS THERE POSITIVE TERM IN TERMS OF f(x) OR TERM HAVING ZERO IN TERMS OF g(x)?   NO

YES

OUTPUT CURRENT SOLUTION AS OPTIMAL SOLUTION — S12b

END

S13
HAS LIMIT TIME PASSED?   NO

YES

ADJUST COEFFICIENTS OF f(x) AND g(x) — S14

OUTPUT RECORDED BEST SOLUTION — S15

END

# FIG. 6

50

60

EXECUTABLE AREA

INEXECUTABLE AREA

51 BOUNDARY AREA

Europäisches
Patentamt

European
Patent Office

Office européen
des brevets

# EUROPEAN SEARCH REPORT

**Application Number**

EP 25 15 4086

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | UMETANI SHUNJI ED - BIERWIRTH CHRISTIAN ET AL: "Exploiting variable associations to configure efficient local search algorithms in large-scale binary integer programs", EUROPEAN JOURNAL OF OPERATIONAL RESEARCH, ELSEVIER, AMSTERDAM, NL, vol. 263, no. 1, 31 May 2017 (2017-05-31), pages 72-81, XP085081968, ISSN: 0377-2217, DOI: 10.1016/J.EJOR.2017.05.025 * abstract * * Algorithms 3-4; page 1 - page 6 * | 1-8 | INV. G06N5/01  ADD. G06N10/60 |
| X | US 2023/316167 A1 (SUZUKI MOTOI [JP] ET AL) 5 October 2023 (2023-10-05) * paragraph [0004] - paragraph [0028] * * paragraph [0060] - paragraph [0168]; claims 1, 12 * | 1-8 | |

**TECHNICAL FIELDS SEARCHED (IPC)**

G06N

The present search report has been drawn up for all claims

| Place of search | Date of completion of the search | Examiner |
|---|---|---|
| The Hague | 17 June 2025 | Cilia, Elisa |

EPO FORM 1503 03.82 (P04C01)

## ANNEX TO THE EUROPEAN SEARCH REPORT
## ON EUROPEAN PATENT APPLICATION NO.

EP 25 15 4086

This annex lists the patent family members relating to the patent documents cited in the above-mentioned European search report.
The members are as contained in the European Patent Office EDP file on
The European Patent Office is in no way liable for these particulars which are merely given for the purpose of information.

17-06-2025

| Patent document cited in search report | Publication date | Patent family member(s) | Publication date |
|---|---|---|---|
| US 2023316167 A1 | 05-10-2023 | JP 7468663 B2 | 16-04-2024 |
| | | JP WO2022024329 A1 | 03-02-2022 |
| | | US 2023316167 A1 | 05-10-2023 |
| | | WO 2022024329 A1 | 03-02-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021043667 A
- JP 2022019432 A
- US 20220414518
- US 20220224590

**Non-patent literature cited in the description**

- **UMETANI**. Exploiting variable associations to configure efficient local search algorithms in large-scale binary integer programs. *European Journal of Operational Research*, 2017, vol. 263, 72-81